# FASCICULE DE BREVET EUROPEEN

(11) **EP 3 177 654 B1**
(45) Date de publication et mention de la délivrance du brevet: **13.06.2018**
(21) Numéro de dépôt: 15754273.9
(22) Date de dépôt: 24.07.2015
(51) Int. Cl.: C08F 220/20, C08F 2/32, C08F 2/38, C08F 220/06, C09K 8/035, D21H 19/10

(54) **POLYMERE HYDROXYALKYLE HYDROSOLUBLE OBTENU PAR UN PROCEDE DE POLYMERISATION EN SUSPENSION INVERSE OU EN EMULSION INVERSE**
DURCH EIN INVERSES SUSPENSIONSVERFAHREN ODER INVERSE EMULSIONSPOLYMERISATION HERGESTELLTES WASSERLÖSLICHES HYDROXYALKYLPOLYMER
WATER-SOLUBLE HYDROXYALKYL POLYMER OBTAINED BY A METHOD OF INVERSE SUSPENSION OR INVERSE EMULSION POLYMERISATION

(30) Priorité: 08.08.2014 FR 1457725
(43) Date de publication de la demande: 14.06.2017
(73) Titulaire: S.P.C.M. SA, 42160 Andrézieux Bouthéon (FR)
(72) Inventeur: CHEUCLE, Pierrick, F-42610 St Romain le Puy (FR)
(74) Mandataire: Cabinet Laurent & Charras
(86) Numéro de dépôt international: PCT/FR2015/052055
(87) Numéro de publication internationale: WO 2016/020599

(56) Documents cités:
- FR-A1- 2 986 033
- DATABASE WPI Week 198204 Thomson Scientific, London, GB; AN 1982-06772E XP002736386, & JP S56 161413 A (KAO SOAP CO LTD) 11 décembre 1981 (1981-12-11)
- YUHONG ZHANG ET AL: "Preparatiion and super-water-absorbency of poly(sodium acrylate-co-acrylamide-co-2-hydroxyethyl acrylate)", POLYMER (KOREA), vol. 30, no. 4, 1 janvier 2006 (2006-01-01), pages 286-290, XP055171741,

## Description

La présente invention concerne des polymères hydroxyalkylés hydrosolubles de haut poids moléculaires obtenus par un procédé de polymérisation en suspension inverse ou en émulsion inverse. L'invention se rapporte également à l'utilisation de ces polymères dans les domaines du forage pétrolier, de l'extraction du gaz et du pétrole, de la fabrication du papier, du traitement de l'eau, ou de l'agriculture.

L'incorporation de fonctions hydroxyles dans un polymère hydrosoluble, notamment à base acrylate ou acrylamide, apporte des propriétés intéressantes pour certains secteurs industriels. On peut citer par exemple les inhibiteurs d'argile dans le domaine du forage pétrolier, les agents de prévention de la précipitation des cations, en particulier dans les eaux salées utilisées dans les opérations d'extraction du gaz et du pétrole, ou encore les agents de surface sur des revêtements papier.

Malheureusement, l'incorporation de fonctions hydroxyles pose de nombreuses difficultés surtout si l'on cherche à obtenir des poids moléculaires élevés. En effet, les fonctions hydroxyles peuvent générer des phénomènes de transfert et donc finalement des problèmes de réticulation. Par exemple, la fonction carboxylique présente dans l'acide acrylique peut conduire à des réactions indésirables d'estérification. Cette estérification, qu'elle ait lieu pendant ou après la polymérisation, entraine la formation d'un produit insoluble et donc impropre à son utilisation.

Les polymères sous forme de poudre ou billes sont de plus en plus recherchés et souhaités au niveau industriel car ils sont facilement transportables et très concentrés en matière active. De plus, ils ont une durée de vie bien plus longue par rapport au polymère sous forme liquide ou d'émulsion, et ont l'avantage de ne pas devoir contenir des agents protecteurs supplémentaires comme des biocides.

Cependant, il est impossible d'obtenir des polymères hydrosolubles et hydroxyalkylés selon le procédé poudre classique car ils sont soit systématiquement réticulés, soit de trop bas poids moléculaire pour être travaillés lors des étapes ultérieures du procédé (gel trop mou et collant).

Le document JP-1981-161413 décrit un procédé de synthèse en suspension inverse de polymères non linéaires contenant des monomères hydroxyalkylés. L'effet de réticulation des fonctions alcool y est exploité pour obtenir ainsi une auto-réticulation et donc un polymère hydrogonflable.

La forme liquide est aujourd'hui celle qui permet d'obtenir le plus facilement un produit techniquement acceptable mais ayant un poids moléculaire faible. Les solutions polymériques ont également comme inconvénient une très faible teneur en matière active (inférieure à 10% en poids) et en conséquence des contraintes de transport et de stockage pour l'utilisateur. De plus, les liquides sont fréquemment soumis à des problèmes de contamination et plus généralement à des problèmes de stabilité dans le temps. Leur durée de vie est donc limitée.

Les procédés de séchage de liquide (par exemple sur tambour sécheur) permettent certes d'obtenir une forme solide à partir d'une solution polymérique liquide mais les polymères obtenus ont un poids moléculaire faible.

Les techniques de l'art antérieur ne permettent pas d'obtenir un polymère hydroxyalkylé sous forme de billes ou de poudre qui soit en même temps hydrosoluble et de haut poids moléculaire.

Le problème que se propose de résoudre l'invention est donc de fournir un polymère hydroxyalkylé sous forme de poudre ou de billes, de haut poids moléculaire et hydrosoluble.

De manière tout à fait surprenante, la Demanderesse a découvert que l'utilisation de la technique de polymérisation en suspension inverse (dite polymérisation bille) ou de polymérisation en émulsion inverse combinée à un faible pourcentage de monomère hydroxyalkylés permettait d'obtenir un polymère hydroxyalkylé sous forme de billes ou de poudre, de haut poids moléculaire et hydrosoluble.

Le poids moléculaire des polymères peut être caractérisé de différentes manières. La Demanderesse a choisi d'exprimer le poids moléculaire grâce à la viscosité directe d'une solution du polymère à une concentration de 5 % en masse dans de l'eau dé-ionisée (eau distillée). Cette mesure est réalisée à 25°C avec un viscosimètre conventionnel de type Brookfield, à une vitesse de 30 tours par minute. Dans la suite de la description, cette viscosité est appelé viscosité Brookfield. Le polymère hydrosoluble étant essentiellement linéaire, la viscosité Brookfield est proportionnelle au poids moléculaire du polymère.

Dans la présente demande, on considère qu'un polymère est hydrosoluble lorsque celui-ci possède un taux d'insoluble dans l'eau inférieur à 1% mesuré selon la méthode suivante. 1 g de polymère est ajouté dans 200 ml d'eau dé-ionisée sous agitation, ladite agitation étant maintenue pendant 4 heures, le tout à 25°C. Le mélange est ensuite filtré sur un filtre dont la porosité est égale à 200 micromètres. Le filtre ayant recueilli les particules insolubles est placé dans une étuve à 105°C pendant 4 heures. Le pourcentage d'insoluble est déterminé par le rapport entre la masse de polymère recueilli dans le filtre après étuvage, et la masse de polymère initialement ajouté, i.e. 1g. Par défaut si le filtre est colmaté par des particules insolubles ayant gonflé et rendant la filtration de la solution impossible, on considère que le taux d'insolubles est supérieur à 2%.

Plus précisément, la présente invention a pour objet un polymère hydrosoluble sous forme de billes ou de poudre présentant une viscosité Brookfield supérieure à 100 cps. Ce polymère est obtenu par polymérisation en suspension inverse ou en émulsion inverse, en présence d'un agent de transfert, de monomères comprenant une fonction éthylénique (CH₂=C-) dont moins de 20 mol% sont constitués d'au moins un monomère hydroxyalkylé de formule H₂C=CR¹R², le complément à 100 mol% étant constitué de monomères non-ioniques et/ou anioniques et/ou cationiques différents dudit monomère hydroxyalkylé. Dans la formule H₂C=CR¹R², R¹ est un atome d'hydrogène ou un groupement méthyle et R² est un groupement hydrocarboné contenant au moins un groupement pendant OH ou au moins un groupement époxyde et optionnellement au moins un hétéroatome N ou O dans la chaine hydrocarbonée ; R² étant distinct du groupement C(=O)-OH.

Selon un mode de réalisation particulier, le groupement R² est un groupement hydrocarboné en C1-C7 contenant au moins un groupement pendant OH, un hétéroatome N, et un hétéroatome O dans la chaine hydrocarbonée.

Selon un autre mode de réalisation particulier, le groupement R² est un groupement hydrocarboné en C1-C7 contenant au moins un groupement pendant OH et deux hétéroatomes O dans la chaine hydrocarbonée.

Selon un mode de réalisation particulier, le groupement R² peut comprendre au moins un groupement époxyde. Le monomère hydroxyalkylé peut alors être choisi dans le groupe comprenant l'acrylate de glycidyl ; le méthacrylate de glycidyl ; et l'allyl glycidyl éther.

Le polymère hydrosoluble selon l'invention est essentiellement linéaire. Il peut présenter d'éventuelles ramifications/réticulations résultant de la présence de fonctions OH du monomère hydroxyalkylé.

La polymérisation en suspension inverse est également appelée polymérisation bille car elle permet d'obtenir des particules sphériques ayant la forme d'une bille. Elle consiste en la polymérisation d'une phase aqueuse de monomères hydrosolubles dispersée sous forme de gouttelettes dans une phase hydrophobe en présence d'au moins un tensioactif stabilisant. Les monomères présents dans les gouttelettes polymérisent grâce à des initiateurs pour obtenir des gouttelettes « gélifiées » composées majoritairement d'eau et de polymère. Une ou plusieurs étapes d'extraction de l'eau et du solvant permettent d'isoler le polymère sous forme de billes.

La polymérisation en émulsion inverse eau dans huile consiste en la polymérisation d'une phase aqueuse de monomères hydrosolubles mise en émulsion sous forme de gouttelettes dans une phase hydrophobe en présence d'au moins un tensioactif stabilisant. Les monomères présents dans les gouttelettes polymérisent grâce à des initiateurs pour obtenir des microgouttelettes composées majoritairement d'eau et de polymère. Une ou plusieurs étapes d'extraction de l'eau et du solvant permettent d'isoler le polymère sous forme de poudre.

La polymérisation en suspension inverse se distingue de la polymérisation en émulsion inverse en raison notamment de la taille des particules polymériques obtenues. Alors que la suspension inverse permet d'obtenir des particules d'au moins 20 micromètres, l'émulsion inverse peut seulement atteindre 5 micromètres. La taille des particules de polymères est liée à la taille des gouttelettes formées dans la suspension ou dans l'émulsion. Chaque gouttelette de phase aqueuse correspond à un réacteur ou microréacteur dans lequel les monomères sont polymérisés.

L'homme du métier sait parfaitement distinguer une polymérisation en suspension inverse d'une polymérisation en émulsion inverse.

Comme déjà indiqué, le polymère hydrosoluble selon l'invention peut être obtenu soit par polymérisation en suspension inverse, soit par polymérisation en émulsion inverse. Il est préférentiellement obtenu par polymérisation en suspension inverse.

Les particules de polymère hydrosoluble et hydroxyalkylé obtenues à l'issue de la polymérisation en suspension inverse (après les étapes d'extraction) sont sous forme de billes. La taille de ces particules est avantageusement comprise entre 20 et 1000 micromètres, plus préférentiellement entre 50 µm et 1000 µm, et encore plus préférentiellement entre 100 µm et 700 µm.

Les particules de polymère hydrosoluble et hydroxyalkylé obtenues à l'issue de la polymérisation en émulsion inverse (après les étapes d'extraction) sont sous forme de poudre. La taille de ces particules est avantageusement comprise entre 0.01 µm et 5 µm, plus préférentiellement entre 0.1 µm et 3 µm, et encore plus préférentiellement entre 0.5 µm et 1.5 µm.

La taille de particule (bille ou poudre) s'entend par le diamètre moyen mesuré avec un granulomètre laser selon les techniques conventionnelles faisant partie des connaissances générales de l'homme du métier. Un exemple d'appareil pour mesurer la taille de particule est le Mastersizer Scirocco 2000 commercialisé par Malvern Instruments. Cependant, tout type d'appareil conventionnel approprié permet de mesurer la taille de particule. L'homme du métier a les connaissances nécessaires pour sélectionner l'appareil approprié.

Le polymère hydrosoluble et hydroxyalkylé selon l'invention présente une viscosité Brookfield préférentiellement supérieure à 200 cps (centipoise, 1 cps = 1 mPa.s), plus préférentiellement supérieure à 1000 cps, encore plus préférentiellement supérieure à 2000 cps, encore plus préférentiellement supérieure à 5000 cps et encore plus préférentiellement supérieure à 10.000 cps.

Le poids moléculaire du polymère hydrosoluble et hydroxyalkylé selon l'invention est avantageusement supérieur à 500.000 g/mol, préférentiellement supérieur à 1 million de g/mol.

Lorsque le groupement hydrocarboné R² contient entre 1 et 3 atomes de carbone, le polymère hydrosoluble et hydroxyalkylé selon l'invention contient préférentiellement moins de 17 mol% de monomère hydroxyalkylé et encore plus préférentiellement moins de 15 mol%. Il contient préférentiellement au moins 8 mol% de monomère hydroxyalkylé et encore plus préférentiellement plus de 10 mol%.

Lorsque le groupement hydrocarboné R² contient plus de 3 atomes de carbone, le polymère hydrosoluble et hydroxyalkylé selon l'invention contient préférentiellement moins de 5 mol% de monomère hydroxyalkylé et encore plus préférentiellement moins de 2.5 mol%. Il contient préférentiellement au moins 0.2 mol% de monomère hydroxyalkylé et encore plus préférentiellement plus de 0.4 mol %.

Comme déjà indiqué, la polymérisation en suspension inverse ou en émulsion inverse est réalisée en présence d'un agent de transfert. A titre d'exemple, l'agent de transfert peut notamment être choisi dans le groupe comprenant le méthanol, l'isopropanol, l'hypophosphite de sodium, le 2-mercaptoéthanol, l'aminoéthanethiol, la cystéine, l'acide méthallylsulfonique, l'acide thioglycolique, l'acide thiolactique, l'acide glycolique, l'acide 3-mercaptopropionique, les sels de métaux alcalins de ces acides, et les mélanges de ces composés.

La quantité d'agent de transfert est avantageusement comprise entre 1 et 5000 ppm, préférentiellement entre 50 et 2000 ppm par rapport au poids des monomères du polymère hydrosoluble et hydroxyalkylé, et encore plus préférentiellement entre 100 et 1500 ppm.

Comme déjà indiqué, le polymère hydrosoluble et hydroxyalkylé selon l'invention comprend moins de 20 mol % d'au moins un monomère hydroxyalkylé de formule H₂C=CR¹R². Ce monomère, lorsqu'il comprend au moins un groupement pendant OH, peut notamment être choisi dans le groupe comprenant l'acrylate d'hydroxyalkyle ; le méthacrylate d'hydroxyalkyle ; l'acrylamide d'hydroxylalkyle ; le méthacrylamide d'hydroxylalkyle ; le 2,3-dihydroxypropyl méthacrylate ; l'acrylate d'amino alcool par exemple le N-acrylamide de tris(hydroxyméthyl)aminométhane ; le méthacrylate d'amino alcool par exemple le N-méthacrylamide de tris(hydroxyméthyl)aminométhane ; alkyle désignant un groupement alkyle linéaire comprenant 1 à 6 atomes de carbone et de préférence 2 à 4 atomes de carbone.

Les monomères (méth)acrylate d'hydroxyalkyle et/ou (méth)acrylamide d'hydroxyalkyle sont préférentiellement choisis parmi le (méth)acrylamide d'hydroxyméthyle, le (méth)acrylate d'hydroxyéthyle, le (méth)acrylate d'hydroxypropyle, le (méth)acrylate d'hydroxybutyle, le (méth)acrylate d'hydroxyméthyle, le (méth)acrylamide d'hydroxyethyle, le (méth)acrylamide d'hydroxypropyle, et le (méth)acrylamide d'hydroxybutyle.

Le polymère selon l'invention est obtenu par copolymérisation de moins de 20 mol% d'au moins un monomère hydroxyalkylé avec plus de 80 mol% d'au moins un autre monomère. Les autres monomères, avantageusement hydrosolubles, pouvant être mis en oeuvre peuvent notamment être choisis parmi les monomères suivants :
- monomère anionique, préférentiellement choisi parmi l'acide acrylique, l'acide méthacrylique, l'acide itaconique, l'acide maléique, l'acide 2-acrylamido-2-méthylpropane sulfonique (ATBS), lesdits monomères étant sous forme acide, partiellement salifiée ou totalement salifiée ;
- monomère non-ionique, préférentiellement choisi parmi l'acrylamide, le méthacrylamide, le N,N'-diméthylacrylamide, la N-vinyl pyrrolidone, la N-vinyl formamide, les méthacrylates de polyéthylène glycol, le diacétoneacrylamide et le N-isopropyl acrylamide.

Les co-momomères sont préférentiellement l'acide acrylique et/ou l'acrylamide, et représentent préférentiellement au moins 50 mol%, plus préférentiellement au moins 70 mol% des monomères du polymère selon l'invention.

Des monomères cationiques hydrosolubles peuvent également être copolymérisés. Dans ce cas, ils sont utilisés préférentiellement à moins de 10 mol%. Dans un mode préféré de l'invention, le polymère ne contient pas de fonctions cationiques.

Des monomères à caractères hydrophobes peuvent également aussi être copolymérisés. Dans ce cas, ils sont utilisés préférentiellement à moins de 1 mol%.

Le procédé de la polymérisation en suspension inverse comprend les étapes successives suivantes :
a) Préparation d'une suspension inverse par mélange d'une phase aqueuse comprenant au moins les monomères et un agent de transfert et d'une phase non aqueuse comprenant au moins un solvant non aqueux et au moins un tensioactif ;
b) Polymérisation en suspension inverse des monomères en présence d'un initiateur de radicaux libres ;
c) Extraction de l'eau et du solvant de la suspension afin d'obtenir le polymère hydrosoluble et hydroxyalkylé sous forme de billes.

Le rapport massique entre la phase aqueuse et le solvant organique non-hydrosoluble est généralement compris entre 1:2 et 8:1 et préférentiellement entre 1:2 et 2:1.

Comme déjà évoqué, les particules obtenues à l'issue de ce procédé de polymérisation en suspension inverse sont sphériques, et se présentent sous forme de billes.

La phase non aqueuse comprend un solvant non soluble dans l'eau et au moins un tensioactif qui stabilise la suspension en permettant de maintenir en suspension les gouttelettes de phase aqueuse dans la phase non aqueuse. De manière avantageuse, la phase non aqueuse est une phase constituée d'un solvant non aqueux préférentiellement choisi parmi une huile minérale, notamment commerciale, contenant des hydrocarbures saturés de type paraffinique, isoparaffinique, cycloparaffinique, naphtalique, ou d'un mélange de plusieurs de ces huiles. Cette huile minérale présente avantageusement, et à température ambiante (22°C), une densité comprise entre 0.7 et 0.9.

De manière avantageuse, le solvant permet de solubiliser le tensio-actif.

Les agents stabilisants peuvent être choisis parmi le dodécyl éther sulphate de sodium, l'ammonium du triméthylstéaryle chloré, l'ammonium de carboxyméthylcétyle, le sucrose, les esters d'acides gras tels que le monostéarate de sucrose, le dilaurate de sucrose, les esters de sorbitan tels que le monostéarate de sorbitan ainsi que parmi les surfactants de haut poids moléculaire qui sont préférentiellement solubles et dispersibles dans la phase continue. Ces composés incluent les éthers de méthyle cellulose, les éthers d'hydroxypropyle méthyle cellulose, les éthers d'éthyle cellulose, l'éthyle hydroxyéthyle cellulose, la méthyle hydroxyméthyle cellulose, les amidons, les polyvinyles acétates partiellement saponifés, les copolymères éthylène/acétate de vinyle saponifiés, les sels de métaux alcalins d'acide poly(méth)acrylique, les copolymères de styrène et d'acétate de vinyle, les copolymères de (méth)acrylate avec les acides (méth)acryliques ou leurs sels, les polyéthylène imines, les alcools polyvinyliques, les polyalkyl (méth)acrylates, pour lesquels le groupe alkyle est une chaine hydrocarbonée linéaire de 12-18 atomes de carbone, avec les acides (méth)acryliques ou leurs sels. Ces agents peuvent être combinés.

De manière avantageuse, le tensio-actif mis en oeuvre est un polymère amphiphile ayant un HLB inférieur à 7.
La réaction de polymérisation de l'étape b) est amorcée par introduction dans la suspension formée à l'étape a) d'un initiateur de radicaux libres. A titre d'exemple d'agent initiateur de radicaux libres, on peut citer les couples oxydant-réducteur avec parmi les oxydants l'hydroperoxyde de cumène ou le butylhydroxypéroxyde tertiaire, et parmi les réducteurs les persulfates tels que le métabisulfite de sodium et le sel de Mohr. Des composés azoïques tels que le 2,2'-azobis(isobutyronitrile) et le chlorhydrate de 2,2'-azobis(2-amidinopropane) peuvent également être utilisés.

L'étape c) d'extraction de l'eau et du solvant de la suspension afin d'obtenir le polymère sous forme de bille est effectuée en une ou plusieurs étapes. Différentes techniques d'extraction peuvent être utilisées, comme par exemple la distillation azéotropique, le séchage avec de l'air chaud, la filtration, la centrifugation. L'étape d'extraction de la suspension comprend préférentiellement deux étapes dont l'une est une étape d'élimination de l'eau et du solvant par distillation azéotropique sous pression réduite, et l'autre est une étape de séparation solide/liquide par exemple par filtration ou centrifugation permettant de séparer les billes du milieu non aqueux.

La distillation azéotropique se fait préférentiellement à une pression comprise entre 20 et 500 mbars et encore plus préférentiellement entre 50 et de 200 mbars.

Le procédé de la polymérisation en émulsion inverse comprend les étapes successives suivantes :
a) Préparation d'une émulsion inverse par mélange d'une phase aqueuse comprenant au moins les monomères et un agent de transfert et d'une phase non aqueuse comprenant au moins un solvant non aqueux et au moins un agent émulsifiant ;
b) Polymérisation en émulsion inverse des monomères en présence d'un initiateur de radicaux libres ;
c) Extraction de l'eau et du solvant de l'émulsion afin d'obtenir le polymère hydrosoluble et hydroxyalkylé sous forme de poudre.

Le rapport massique entre la phase aqueuse et le solvant organique non-hydrosoluble est généralement compris entre 1:2 et 8:1 et préférentiellement entre 1:2 et 2:1.

Comme déjà évoqué, les particules obtenues à l'issue de ce procédé sont essentiellement non sphériques, et se présentent sous forme de poudre.

La phase non aqueuse comprend un solvant non soluble dans l'eau et au moins un agent émulsifiant qui stabilise l'émulsion en permettant de maintenir en émulsion les gouttelettes de phase aqueuse dans la phase non aqueuse. De manière avantageuse, la phase non aqueuse est une phase constituée d'un solvant non aqueux préférentiellement choisi parmi une huile minérale, notamment commerciale, contenant des hydrocarbures saturés de type paraffinique, isoparaffinique, cycloparaffinique, naphtalique, ou d'un mélange de plusieurs de ces huiles. Cette huile présente avantageusement, et à température ambiante (22°C), une densité comprise entre 0.7 et 0.9.

Le solvant permet de solubiliser l'agent émulsifiant.

L'agent émulsifiant peut être choisi parmi les agents émulsifiant du type eau dans huile (E/H), on entend un agent émulsifiant possédant une valeur HLB suffisamment faible pour fournir des émulsions eau dans huile, et notamment une valeur HLB inférieure à 10.

A titre d'exemple de tels agents émulsifiants eau dans huile, on peut citer les polymères tensioactifs tels que les polyesters de poids moléculaire compris entre 1000 et 3000, produits de la condensation entre un acide poly(isobutényl) succinique ou son anhydride et un polyéthylène glycol, les copolymères à blocs de poids moléculaire compris entre 2500 et 3500, par exemple ceux commercialisés sous les noms HYPERMER®, les extraits de sorbitan, comme le monooléate de sorbitan, l'isostéarate de sorbitan ou le sesquioléate de sorbitan, certains esters de sorbitan polyéthoxylés, comme le monooléate de sorbitan pentaéthoxylé ou l'isostéarate de sorbitan pentaéthoxylé, ou encore l'alcool oléocétylique diéthoxylé, l'acrylate de lauryle tétraéthoxylé. Ces agents peuvent être combinés.

La réaction de polymérisation de l'étape b) est amorcée par introduction dans l'émulsion formée à l'étape a) d'un initiateur de radicaux libres. A titre d'exemple d'agent initiateur de radicaux libres, on peut citer les couples oxydant-réducteur avec parmi les oxydants l'hydroperoxyde de cumène ou le butylhydroxypéroxyde tertiaire, et parmi les réducteurs les persulfates tels que le métabisulfite de sodium et le sel de Mohr. Des composés azoïques tels que le 2,2'-azobis(isobutyronitrile) et le chlorhydrate de 2,2'-azobis(2-amidinopropane) peuvent également être utilisés.

L'étape c) d'extraction de l'eau et du solvant de l'émulsion afin d'obtenir le polymère sous forme de poudre est effectuée en une ou plusieurs étapes. II existe en particulier de nombreux procédés d'obtention de poudre à partir d'émulsions inverses de polymères qui consistent à isoler la matière active des autres constituants de l'émulsion comme par exemple :
- la précipitation dans un milieu non solvant tel que l'acétone, le méthanol ou tout autre solvant polaire dans lequel le polymère n'est pas soluble. Une simple filtration permet alors d'isoler la particule de polymère.
- la distillation azéotropique en présence d'agent agglomérant et de polymère stabilisant permet de conduire à des agglomérats que l'on isole facilement par filtration avant de procéder au séchage de la particule.
- le "spray-drying" ou séchage par atomisation consiste à créer un nuage de fines gouttelettes d'émulsions dans un courant d'air chaud, pendant une durée contrôlée. Dans ce cas, l'étape d'extraction de l'eau et du solvant comprend une étape d'élimination de l'eau et du solvant par séchage par atomisation.

Une méthode particulièrement adaptée pour obtenir les polymères selon l'invention est le séchage par atomisation.

L'invention concerne également l'utilisation du polymère selon l'invention dans les domaines du forage pétrolier, de la récupération (ou extraction) du gaz, de la récupération (ou extraction) du pétrole, de la fabrication du papier, du traitement de l'eau, de l'agriculture.

L'invention et les avantages qui en découlent ressortiront bien des exemples de réalisation suivants et n'ont pas un caractère limitatif.

### EXEMPLES DE REALISATION DE L'INVENTION

Dans une première partie, un copolymère d'acrylate d'hydroxypropyle (HPA) (3 mol%) / acrylate de sodium (AA.Na) (97 mol%) est synthétisé selon différentes méthodes de polymérisation et selon le procédé en suspension inverse. Les quantités en ppm ci-dessous sont exprimées en poids par rapport au poids des monomères.

### Contre-exemple 1 (CE-1) : Synthèse selon le procédé liquide séché

Dans un réacteur agité de 1L équipé d'une sonde de température et d'une arrivée d'azote, on introduit d'abord 554 g d'eau et 165.6 g d'acide acrylique glacial. On neutralise à pH = 5 en ajoutant 92 g d'une solution aqueuse de soude à 50% en poids tout en contrôlant l'exothermie.

A l'issue de la neutralisation, on ajoute 9.2 g d'acrylate d'hydroxypropyle, 0.15 g d'hypophosphite de sodium et 0.2 g d'un initiateur azoïque. Le milieu réactionnel est ensuite inerté à l'azote. La réaction est ensuite initiée à température ambiante par addition d'un couple redox (persulfate d'ammonium / sel de Mohr). La polymérisation qui démarre immédiatement, se poursuit jusqu'à son terme soit environ 75°C.

Le liquide est ensuite engagé sur un tambour sécheur pilote qui par évaporation de l'eau permet d'obtenir la poudre finale.

Mise en solution à 5 % le polymère ainsi obtenu a une viscosité Brookfield de 210 cps et un taux d'insolubles supérieur à 2 %.

Pour limiter la réticulation, la dose de limiteur est doublée. La viscosité Brookfield est alors de 40 cps seulement.

Ceci montre que cette technique ne permet pas obtenir un polymère sous forme de poudre et de poids moléculaire suffisant sans être en même temps confronté à des problèmes de solubilité.

### Contre-exemple 2 (CE-2) : Synthèse selon le procédé gel

Une solution est préparée à partir de 655.6 g d'eau g et 231.9 g d'acide acrylique partiellement neutralisé à l'aide d'une solution aqueuse de 128.8 g de soude à 50 % en poids. On ajoute à cette solution 12.9 g d'acrylate d'hydroxypropyle avant de la refroidir aux alentours de 10°C.

La solution est placée dans un Dewar, additionnée de 35 mg d'EDTA, 100 ppm d'hypophosphite de sodium et 800 ppm d'AZDN. Après inertage avec de l'azote, la polymérisation est initiée à l'aide d'un couple redox (persulfate d'ammonium / sel de - Mohr). La réaction se poursuit jusqu'à son terme et un gel de bonne consistance est obtenu. Celui est ensuite broyé et séché de sorte à obtenir une poudre.

Mise en solution à 5 % le polymère ainsi obtenu a une viscosité Brookfield de 5000 cps et un taux d'insolubles supérieur à 2%.

L'augmentation de la teneur en agent de transfert et/ou l'accélération de la cinétique réactionnelle soit en concentrant la matière active, soit en augmentant les doses d'amorceur ne permet jamais d'obtenir un produit sec complètement hydrosoluble.

### Exemple 1 (INV-1) : Synthèse selon procédé en suspension inverse

Une solution diluée de monomère est préparée à partir de 150 g d'eau et 217.2 g d'acide acrylique glacial. La solution est neutralisée à l'aide de 121.6 g de soude à 50% de concentration puis additionnée de 12.1 g d'acrylate d'hydroxypropyle (HPA).

Dans un réacteur calorifugé muni d'une sonde de température et d'un système d'agitation on introduit séparément 500 g d'heptane et 1 g de stabilisant polymérique de HLB égal à 4 avant inertage avec de l'azote.

La phase aqueuse est alors additionnée de 0.25 g d'acide thiolactique (agent de transfert) ainsi que de 100 ppm de metabisulfite (agent réducteur), puis placée dans une ampoule de coulée. Le contenu de l'ampoule de coulée est ensuite versé rapidement sous agitation dans le réacteur.

Un oxydant liposoluble est ensuite ajouté pour initier la polymérisation. La réaction démarre immédiatement et se poursuit seule jusqu'à atteindre une température finale de 90°C. A l'issue de la polymérisation, l'eau est évaporée sous pression réduite et les billes formées sont finalement filtrées, séchées à l'étuves et tamisées.

Mis en solution à 5 %, le polymère ainsi obtenu a une viscosité Brookfield de 2000 cps et un taux d'insolubles de 0.1 %. La taille moyenne des particules est de 250 µm.

Dans une deuxième partie, la quantité l'acrylate d'hydroxypropyle (HPA) est augmentée de 3% en mole à 15 mol% (INV-2) et 25 mol% (CE-3). La même méthode de polymérisation selon l'exemple 1 est utilisée. Les résultats sont consignés dans le tableau 1.

**Tableau 1 : Viscosité et pourcentage d'insoluble d'un polymère HPA/(AA.Na) en fonction de son mode d'obtention.**

| Exemple | Ratio en mol% (HPA / AA.Na) | Viscosité Brookfield à 25°C | % insolubles |
|---|---|---|---|
| INV-1 | 3/97 | 2000 cps | 0.1% |
| INV-2 | 15/85 | 2500 cps | 0.3% |
| CE-1 (liquide) | 3/97 | 210 cps | >2% |
| CE-2 (gel) | 3/97 | 5000 cps | >2% |
| CE-3 (bille) | 25/75 | 6300 cps | >2% |

| | | | |
|---|---|---|---|
| (AA.Na = acrylate de sodium) | | | |

La viscosité Brookfield est mesurée pour une solution de polymère à 5 % en poids dans de l'eau dé-ionisée. Cette mesure est réalisée à 25°C avec un viscosimètre conventionnel de type Brookfield, et à une vitesse de 30 tours par minute.

Ces résultats montrent l'importance d'avoir une quantité limitée de monomère acrylate d'hydroxypropyle (< 20 mol%) lorsque la polymérisation est effectuée en suspension inverse.

## Revendications

1. Polymère hydroxyalkylé hydrosoluble sous forme de billes ou de poudre, ***caractérisé* en ce qu'**il présente une viscosité Brookfield supérieure à 100 cps (0.1 Pa·s), mesurée à 25°C avec un un viscosimètre conventionnel de type Brookfield, à une vitesse de 30 tours par minute, et **en ce qu'**il est obtenu par polymérisation en suspension inverse ou en émulsion inverse, en présence d'un agent de transfert, de monomères comprenant une fonction CH₂=C- dont moins de 20 mol% sont constitués d'au moins un monomère hydroxyalkylé de formule H₂C=CR¹R², le complément à 100 mol% étant constitué de monomères non-ioniques et/ou anioniques et/ou cationiques différents dudit monomère hydroxyalkylé,
R¹ étant un atome d'hydrogène ou un groupement méthyle et R² étant un groupement hydrocarboné contenant au moins un groupement pendant OH ou au moins un groupement époxyde et optionnellement au moins un hétéroatome N ou O dans la chaine hydrocarbonée ; R² étant distinct du groupement C(=O)-OH.

2. Polymère selon la revendication 1, ***caractérisé* en ce qu'**il présente une viscosité Brookfield supérieure à 200 cps (0.2 Pa·s).

3. Polymère selon la revendication 1 ou 2, ***caractérisé* en ce que** l'agent de transfert est choisi dans le groupe comprenant le méthanol, l'isopropanol, l'hypophosphite de sodium, le 2-mercaptoéthanol, l'aminoéthanethiol, la cystéine, l'acide méthallylsulfonique, l'acide thioglycolique, l'acide thiolactique, l'acide glycolique, l'acide 3-mercaptopropionique, les sels de métaux alcalins de ces acides, et les mélanges de ces composés.

4. Polymère selon l'une des revendications 1 à 3, ***caractérisé* en ce que** le polymère contient plus de 8 mol% et moins de 17 mol% de monomère hydroxyalkylé lorsque le groupement hydrocarboné R² contient entre 1 et 3 atomes de carbone.

5. Polymère selon l'une des revendications 1 à 3, ***caractérisé* en ce que** le polymère contient plus de 0.2 mol% et moins de 5 mol% de monomère hydroxyalkylé lorsque le groupement hydrocarboné R² contient plus de 3 atomes de carbone.

6. Polymère selon l'une des revendications 1 à 5, ***caractérisé* en ce que** le monomère hydroxyalkylé comprenant au moins un groupement pendant OH est choisi dans le groupe comprenant l'acrylate d'hydroxyalkyle ; le méthacrylate d'hydroxyalkyle ; l'acrylamide d'hydroxylalkyle ; le méthacrylamide d'hydroxylalkyle ; le méthacrylamido propyldiméthyl-2,3-dihydroxypropyl ammonium sulfate ; le 2,3-dihydroxypropyl méthacrylate ; l'acrylate d'amino alcool ; le méthacrylate d'amino alcool ; alkyle désignant un groupement alkyle linéaire comprenant 1 à 6 atomes de carbone ;
et **en ce que** le monomère hydroxyalkylé comprenant au moins un groupement époxyde est choisi dans le groupe comprenant l'acrylate de glycidyl ; le méthacrylate de glycidyl ; et l'allyl glycidyl éther.

7. Polymère selon l'une des revendications 1 à 6, ***caractérisé* en ce qu'**il comprend un monomère anionique choisi dans le groupe comprenant l'acide acrylique, l'acide méthacrylique, l'acide itaconique, l'acide maléique, et l'acide 2-acrylamido-2-méthylpropane sulfonique (ATBS), lesdits monomères étant sous forme acide, partiellement salifiée ou totalement salifiée.

8. Polymère selon l'une des revendications 1 à 7, ***caractérisé* en ce que** le polymère obtenu par polymérisation en suspension inverse se présente sous forme de bille dont la taille est comprise entre 20 micromètres et 1000 micromètres.

9. Polymère selon l'une des revendications 1 à 7, ***caractérisé* en ce que** le polymère obtenu par polymérisation en émulsion inverse se présente sous forme de poudre et présente une taille de particule, entendue par le diamètre moyen mesuré avec un granulomètre laser, comprise entre 0.01 micromètres et 5 micromètres.

10. Procédé de préparation du polymère objet de l'une des revendications 1 à 8, comprenant les étapes successives suivantes :
a) préparation d'une suspension inverse par mélange d'une phase aqueuse comprenant au moins des monomère et un agent de transfert et d'une phase non aqueuse comprenant au moins un solvant non aqueux et au moins un tensio actif ;
les monomères comprenant une fonction CH₂=C- dont moins de 20 mol% sont constitués d'au moins un monomère hydroxyalkylé de formule H₂C=CR¹R², le complément à 100 mol% étant constitué de monomères non-ioniques et/ou anioniques et/ou cationiques différents dudit monomère hydroxylakylé,
R¹ étant un atome d'hydrogène ou un groupement méthyle et R² étant un groupement hydrocarboné contenant au moins un groupement pendant OH ou au moins un groupement époxyde et optionnellement au moins un hétéroatome N ou O dans la chaine hydrocarbonée ; R² étant distinct du groupement C(=O)-OH;
b) polymérisation en suspension inverse des monomères en présence d'un initiateur de radicaux libres ;
c) extraction de l'eau et du solvant de la suspension afin d'obtenir sous forme de billes le polymère hydrosoluble, hydroxyalkylé et présentant une viscosité Brookfield supérieure à 100 cps (0.1 Pa·s).

11. Procédé selon la revendication 10, ***caractérisé* en ce que** l'étape d'extraction de l'eau et du solvant comprend une étape d'élimination de l'eau et du solvant par distillation azéotropique, et une étape de séparation solide/liquide.

12. Procédé selon la revendication 10 ou 11, ***caractérisé* en ce que** l'étape d'extraction de l'eau et du solvant comprend une étape d'élimination de l'eau et du solvant par distillation azéotropique réalisée à une pression comprise entre 20 et 500 mbars.

13. Procédé de préparation du polymère objet de l'une des revendications 1 à 7, comprenant les étapes successives suivantes :
a) préparation d'une émulsion inverse par mélange d'une phase aqueuse comprenant au moins des monomères et un agent de transfert et d'une phase non aqueuse comprenant au moins un solvant non aqueux et au moins un agent émulsifiant ;
les monomères comprenant une fonction CH₂=C- dont moins de 20 mol% sont constitués d'au moins un monomère hydroxyalkylé de formule H₂C=CR¹R², le complément à 100 mol% étant constitué de monomères non-ioniques et/ou anioniques et/ou cationiques différents dudit monomère hydroxyalkylé,
R¹ étant un atome d'hydrogène ou un groupement méthyle et R² étant un groupement hydrocarboné contenant au moins un groupement pendant OH ou au moins un groupement époxyde et optionnellement au moins un hétéroatome N ou O dans la chaine hydrocarbonée ; R² étant distinct du groupement C(=O)-OH;
b) polymérisation en émulsion inverse des monomères en présence d'un initiateur de radicaux libres ;
c) extraction de l'eau et du solvant de l'émulsion afin d'obtenir sous forme de poudre le polymère hydrosoluble, hydroxyalkylé et présentant une viscosité Brookfield supérieure à 100 cps (0.1 Pa·s).

14. Procédé selon la revendication 13, ***caractérisé* en ce que** l'étape d'extraction de l'eau et du solvant comprend une étape d'élimination de l'eau et du solvant par séchage par atomisation.

15. Utilisation du polymère selon l'une des revendications 1 à 9 dans les domaines du forage pétrolier, de la récupération du gaz, de la récupération du pétrole, de la fabrication du papier, du traitement de l'eau, et de l'agriculture.

## Patentansprüche

1. Wasserlösliches, hydroxyalkyliertes Polymer, in Form von Kügelchen oder Pulvern, **dadurch gekennzeichnet, dass** es eine Brookfield-Viskosität von mehr als 100 cps (0.1 Pa•s) aufweist, gemessen bei 25°C mit einem herkömmlichen Viskosimeter vom Brookfield-Typ, bei einer Geschwindigkeit von 30 Umdrehungen pro Minute und dadurch, dass es Ergebnis einer Polymerisation durch inverse Suspension oder inverse Emulsion ist, in Gegenwart eines Übertragungsmittels, von Monomeren mit einer Funktion CH₂=C-, bei denen weniger als 20 Mol-% aus mindestens einem hydroxyalkylierten Monomer mit der Formel H₂C=CR¹R², bestehen, die restliche Menge bis 100 mol% besteht aus nichtionischen und/oder anionischen und/oder kationischen Monomeren, die sich von diesem hydroxyalkylierten Monomer unterscheiden,
wobei R¹ ein Wasserstoffatom oder eine Methylgruppe ist und R² eine Kohlenwasserstoffgruppe, die mindestens eine OH-Seitengruppe oder mindestens eine Epoxidgruppe enthält und gegebenenfalls mindestens ein N- oder O-Heteroatom in der Kohlenwasserstoffkette; R² ist von der C(=O)-OH-Gruppe verschieden.

2. Polymer nach Anspruch 1, **dadurch gekennzeichnet, dass** es eine Brookfield-Viskosität von mehr als 200 cps (0.2 Pa•s) aufweist.

3. Polymer gemäß Anspruch 1 oder 2, **dadurch gekennzeichnet, dass** das Übertragungsmittel ausgewählt wird aus der Gruppe zu der Methanol, Isopropanol, Natriumhypophosphit, 2-Mercaptoethanol, Aminoethanthiol, Cystein, Methallylsulfonsäure, Thioglykolsäure, Thiomilchsäure, Glycolsäure, 3-Mercaptopropionsäure, die alkalischen Salze dieser Säuren und die Mischungen dieser Verbindungen gehören.

4. Polymer nach einem der Ansprüche 1 bis 3, **dadurch gekennzeichnet, dass** das Polymer mehr als 8 mol% und weniger als 17 mol% hydroxyalkyliertes Monomer enthält, wenn die Kohlenwasserstoffgruppe R² zwischen 1 und 3 Kohlenstoffatome enthält.

5. Polymer nach einem der Ansprüche 1 bis 3, **dadurch gekennzeichnet, dass** das Polymer mehr als 0.2 mol% und weniger als 5 mol% hydroxyalkyliertes Monomer enthält, wenn die Kohlenwasserstoffgruppe R² mehr als 3 Kohlenstoffatome enthält.

6. Polymer nach einem der Ansprüche 1 bis 5, **dadurch gekennzeichnet, dass** das hydroxyalkylierte Monomer, das mindestens eine OH-Seitengruppe umfasst, ausgewählt wird aus der Gruppe zu der Hydroxyalkylacrylat; Hydroxyalkylmethacrylat; Hydroxylalkyleacrylamid; Hydroxylalkylmethacrylamid; Methacrylamido-propyldimethyl-2,3-dihydroxypropylammoniumsulfat; 2,3-Dihydroxypropylmethacrylat; Amino-Alkoholacrylat; und Amino-Alkohol-Methacrylat gehören, Alkyl bezeichnet eine lineare Alkylgruppe, die 1 bis 6 Kohlenstoffatome aufweist;
und dadurch dass das hydroxyalkylierte Monomer mindestens eine Epoxidgruppe umfasst, ausgewählt aus der Gruppe zu der Glycidylacrylat; Glycidylmethacrylat und Allylglycidylether gehören.

7. Polymer nach einem der Ansprüche 1 bis 6, **dadurch gekennzeichnet, dass** es ein anionisches Monomer enthält, ausgewählt aus der Gruppe zu der Acrylsäure, Methacrylsäure, Itaconsäure, Maleinsäure und 2-Acrylamido-2-Methylpropansulfonsäure (ATBS) gehören, diese Monomere haben die Säureform, eine teilweise Salzform oder die vollständige Salzform.

8. Polymer nach einem der Ansprüche 1 bis 7, **dadurch gekennzeichnet, dass** das durch die Polymerisation durch inverse Suspension erhaltende Polymer die Form eines Kügelchens hat, dessen Größe zwischen 20 Mikrometern und 1.000 Mikrometern liegt.

9. Polymer nach einem der Ansprüche 1 bis 7, **dadurch gekennzeichnet, dass** das durch die Polymerisation durch inverse Emulsion erhaltene Polymer die Form eines Pulvers hat und seine Teilchengröße, worunter der mittlere Durchmesser zu verstehen ist, gemessen mit einem Laser-Granulometer, zwischen 0,01 Mikrometern und 5 Mikrometern liegt.

10. Verfahren zur Herstellung des Polymers, das Gegenstand eines der Ansprüche 1 bis 8 ist, welches die nachstehenden, aufeinanderfolgenden Schritte umfasst:
a) Herstellung einer inversen Suspension durch Mischung einer wässrigen Phase, die mindestens Monomere und ein Übertragungsmittel enthält, mit einer nicht wässrigen Phase, die mindestens ein nicht wässriges Lösungsmittel und mindestens ein Tensid enthält;
die Monomere umfassen dabei eine Funktion CH₂=C- in der mindestens 20 mol% aus mindestens einem hydroxyalkylierten Monomer mit der Formel H₂C=CR¹R² bestehen, die restliche Menge bis 100 mol% besteht aus nichtionischen und/ oder anionischen und/oder kationischen Monomeren, die sich von diesem hydroxyalkylierten Monomer unterscheiden,
R¹ ist ein Wasserstoffatom oder eine Methylgruppe und R² ist eine Kohlenwasserstoffgruppe, die mindestens eine OH-Seitengruppe oder mindestens eine Epoxidgruppe enthält und gegebenenfalls mindestens ein N- oder O-Heteroatom in der Kohlenwasserstoffkette; R² ist von der C(=O)-OH-Gruppe verschieden;
b) Polymerisation durch inverse Suspension von Monomeren in Anwesenheit eines freie Radikale-Initiators;
c) Extraktion des Wassers und des Lösungsmittels aus der Suspension, um in Form von Kügelchen das wasserlösliche, hydroxyalkylierte Polymer, mit einer Brookfield-Viskosität von mehr als 100 cps (0.1 Pa•s) zu erhalten.

11. Verfahren nach Anspruch 10, **dadurch gekennzeichnet, dass** der Schritt der Extraktion des Wassers und des Lösungsmittels einen Schritt der Wasser- und Lösungsmittelentfernung durch azeotrope Destillation und einen Schritt der Trennung Feststoffe/ Flüssigkeiten umfasst.

12. Verfahren nach Anspruch 10 oder 11, **dadurch gekennzeichnet, dass** der Schritt der Extraktion des Wassers und des Lösungsmittels einen Schritt der Wasser- und Lösungsmittelentfernung durch azeotrope Destillation, durchgeführt bei einem Druck zwischen 20 und 500 mbar umfasst.

13. Verfahren zur Herstellung des Polymers, das Gegenstand eines der Ansprüche 1 bis 7 ist, welches die nachstehenden, aufeinanderfolgenden Schritte umfasst:
a) Herstellung einer inversen Emulsion durch Mischung einer wässrigen Phase, die mindestens Monomere und ein Übertragungsmittel enthält, mit einer nicht wässrigen Phase, die mindestens ein nicht wässriges Lösungsmittel und mindestens einen Emulgator enthält;
die Monomere umfassen dabei eine Funktion CH₂=C- in der mindestens 20 mol% aus mindestens einem hydroxyalkylierten Monomer mit der Formel H₂C=CR¹R² bestehen, die restliche Menge bis 100 mol% besteht aus nichtionischen und/ oder anionischen und/oder kationischen Monomeren, die sich von diesem hydroxyalkylierten Monomer unterscheiden.
R¹ ist ein Wasserstoffatom oder eine Methylgruppe und R² ist eine Kohlenwasserstoffgruppe, die mindestens eine OH-Seitengruppe oder mindestens eine Epoxidgruppe enthält und gegebenenfalls mindestens ein N- oder O-Heteroatom in der Kohlenwasserstoffkette; R² ist von der C(=O)-OH-Gruppe verschieden;
b) Polymerisation von Monomeren durch inverse Emulsion in Anwesenheit eines freie Radikale-Initiators;
c) Extraktion des Wassers und des Lösungsmittels aus der Emulsion, um in Form von Kügelchen das wasserlösliche, hydroxyalkylierte Polymer, mit einer Brookfield-Viskosität von mehr als 100 cps (0.1 Pa•s) zu erhalten.

14. Verfahren nach Anspruch 13, **dadurch gekennzeichnet, dass** der Schritt der Extraktion des Wassers und des Lösungsmittels einen Schritt der Wasser- und Lösungsmittelentfernung durch Sprühtrocknen umfasst.

15. Einsatz des Polymers nach einem der Ansprüche 1 bis 9 auf den Gebieten der Ölbohrung, der Gasrückgewinnung, der Ölrückgewinnung, der Papierherstellung, der Wasseraufbereitung und der Landwirtschaft.

## Claims

1. A hydroxyalkylated water-soluble polymer in bead or powder form, ***characterized* in that** it has a Brookfield viscosity greater than 100 cps (0.1 Pa.s), measured at 25°C with a conventional Brookfield type viscosimeter, at a speed of 30 tours per minute, and **in that** it is obtained by inverse suspension or inverse emulsion polymerization, in the presence of a transfer agent, of monomers comprising a CH₂=C- function whereof less than 20 mol% is made up of at least one hydroxyalkylated monomer of formula H₂C=CR¹R², the 100 mol% addition being made up of non-ionic and/or anionic and/or cationic monomers different from said hydroxyalkylated monomer,
R¹ being a hydrogen atom or a methyl group and R² being a hydrocarbon group containing at least one OH pendant group or at least one epoxide group and optionally at least one N or O heteroatom in the hydrocarbon chain; R² being different from the C(=O)-OH group.

2. The polymer according to claim 1, ***characterized* in that** it has a Brookfield viscosity greater than 200 cps (0.2 Pa.s).

3. The polymer according to claim 1 or 2, ***characterized* in that** the transfer agent is chosen from the group comprising methanol, isopropanol, sodium hypophosphite, 2-mercaptoethanol, aminoethanethiol, cysteine, methallyl sulfonic acid, thioglycolic acid, thiolactic acid, glycolic acid, 3-mercaptopropionic acid, the alkaline earth salts of these acids, and the mixtures of these compounds.

4. The polymer according to one of claims 1 to 3, ***characterized* in that** the polymer contains more than 8 mol% and less than 17 mol% of hydroxyalkylated monomer when the R² hydrocarbon group contains between 1 and 3 carbon atoms.

5. The polymer according to one of claims 1 to 3, ***characterized* in that** the polymer contains more than 0.2 mol% and less than 5 mol% of hydroxyalkylated monomer when the R² hydrocarbon group contains more than 3 carbon atoms.

6. The polymer according to one of claims 1 to 5, ***characterized* in that** the hydroxyalkylated monomer comprising at least one OH pendant group is chosen from the group including hydroxyalkyl acrylate; hydroxyalkyl methacrylate; hydroxyalkyl acrylamide; hydroxyalkyl methacrylamide; methacrylamido propyldimethyl-2,3-dihydroxypropyl ammonium sulfate; 2,3-dihydroxypropyl methacrylate; amino alcohol acrylate; amino alcohol methacrylate; alkyl designating a linear alkyl group comprising 1 to 6 carbon atoms;
and **in that** the hydroalkylated monomer comprising at least one epoxide group is chosen from the group including glycidyl acrylate; glycidyl methacrylate; and glycidyl allyl ether.

7. The polymer according to one of claims 1 to 6, ***characterized* in that** it comprises an anionic monomer chosen from the group comprising acrylic acid, methacrylic acid, itaconic acid, maleic acid and 2-acrylamido-2-methylpropane sulfonic acid (ATBS), said monomers being in acid form, partially salified or totally salified.

8. The polymer according to one of claims 1 to 7, ***characterized* in that** the polymer obtained by inverse suspension polymerization is in the form of a bead, the size of which is between 20 micrometers and 1000 micrometers.

9. The polymer according to one of claims 1 to 7, ***characterized* in that** the polymer obtained by inverse emulsion polymerization is in the form of a powder and has a particle size, referring to the mean diameter measured with a laser granulometer, between 0.01 micrometers and 5 micrometers.

10. A method for preparing the polymer according to one of claims 1 to 8, comprising the following successive steps:
a) preparing an inverse suspension by mixing an aqueous phase comprising at least monomers and a transfer agent and a non-aqueous phase comprising at least one non-aqueous solvent and at least one surfactant;
the monomers comprising a CH₂=C- function whereof less than 20 mol% is made up of at least one hydroalkylated monomer of formula H₂C=CR¹R², the 100 mol% addition being made up of non-ionic and/or anionic and/or cationic monomers different from said hydroalkylated monomer,
R¹ being a hydrogen atom or a methyl group and R² being a hydrocarbon group containing at least one OH pendant group or at least one epoxide group and optionally at least one N or O heteroatom in the hydrocarbon chain; R² being different from the C(=O)-OH group;
b) inverse suspension polymerization of the monomers in the presence of a free radical initiator;
c) extracting water and solvent from the suspension in order to obtain, in bead form, the hydroxyalkylated water-soluble polymer with a Brookfield viscosity greater than 100 cps (0.1 Pa.s).

11. The method according to claim 10, ***characterized* in that** the step for extracting water and solvent comprises a step for eliminating water and solvent by azeotropic distillation, and a solid/liquid separating step.

12. The method according to claim 10 or 11, ***characterized* in that** the step for extracting water and solvent comprises a step for eliminating water and solvent by azeotropic distillation done at a pressure between 20 and 500 mbars.

13. A method for preparing the polymer according to one of claims 1 to 7, comprising the following successive steps:
a) preparing an inverse emulsion by mixing an aqueous phase comprising at least monomers and a transfer agent and a non-aqueous phase comprising at least one non-aqueous solvent and at least one emulsifying agent;
the monomers comprising a CH₂=C- function whereof less than 20 mol% is made up of at least one hydroalkylated monomer of formula H₂C=CR¹R², the 100 mol% addition being made up of non-ionic and/or anionic and/or cationic monomers different from said hydroalkylated monomer,
R¹ being a hydrogen atom or a methyl group and R² being a hydrocarbon group containing at least one OH pendant group or at least one epoxide group and optionally at least one N or O heteroatom in the hydrocarbon chain; R² being different from the C(=O)-OH group;
b) inverse emulsion polymerization of the monomers in the presence of a free radical initiator;
c) extracting water and solvent from the emulsion in order to obtain, in powder form, the hydroxyalkylated water-soluble polymer with a Brookfield viscosity greater than 100 cps (0.1 Pa.s).

14. The method according to claim 13, ***characterized* in that** the step for extracting water and solvent comprises a step for eliminating water and solvent by spray-drying.

15. Use of the polymer according to one of claims 1 to 9 in the fields of oil drilling, gas recovery, oil recovery, paper manufacturing, water treatment, and agriculture.
